(19) Europäisches Patentamt
European Patent Office
Office européen des brevets

(11) EP 1 801 139 A2

## (12) EUROPEAN PATENT APPLICATION

(43) Date of publication:
27.06.2007 Bulletin 2007/26

(51) Int Cl.:
C08G 18/40 (2006.01)    C08G 18/42 (2006.01)
C08G 18/48 (2006.01)

(21) Application number: 06026287.0

(22) Date of filing: 19.12.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 21.12.2005 JP 2005368152
16.06.2006 JP 2006167722

(71) Applicant: KAO CORPORATION
Chuo-ku,
Tokyo (JP)

(72) Inventor: Sawai, Minoru
1334 Minato
Wakayama-shi
Wakayama-ken (JP)

(74) Representative: HOFFMANN EITLE
Patent- und Rechtsanwälte
Arabellastrasse 4
81925 München (DE)

## (54) Method for producing polyurethane foam

(57)    A method for producing a polyurethane foam having a density of 0.1 g/cm$^3$ or more, including the step of reacting a polyol component and a polyisocyanate component, the polyol component containing (polyol A): a polyester-polyol having a hydroxyl value of from 45 to 115 mgKOH/g, obtained by polycondensing a polyhydric alcohol component containing a polyhydric alcohol having a side chain and a polybasic acid component; and (polyol B): a polyether-polyol having 3 functional groups and a hydroxyl value of from 15 to 40 mgKOH/g, wherein the weight ratio of the polyol A to the polyol B, i.e. polyol A/polyol B, is from 1.2 to 3. The polyurethane foam obtained according to the method of the present invention can be suitably used, for example, in shoe soles, cushioning materials for automobiles and other transportation vehicles, furniture, beddings, and the like.

EP 1 801 139 A2

**Description**

FIELD OF THE INVENTION

The present invention relates to a method for producing a polyurethane foam. More specifically, the present invention relates to a method for producing a polyurethane foam which can be suitably used, for example, as shoe soles and cushioning materials for automobiles and other vehicles, furniture, beddings, and the like, a polyurethane foam which can be obtained by the method; a shoe sole having the polyurethane foam; and a shoe having the shoe sole.

BACKGROUND OF THE INVENTION

Polyurethane foams have been chiefly used for a variety of applications, such as heat insulating materials, cushions, and shoe soles. Among polyurethane foams, in the field of semi-rigid polyurethane foam especially used for a shoe sole or the like, a polyurethane foam having sufficient strength to secure its function as a shoe sole or the like, and having low rebound resilience has been desired. In addition, a polyurethane foam which is aimed at further weight reduction, from the viewpoint of reducing fatigue, and has the above-mentioned properties, has been desired.
Conventionally, in order to satisfy both low rebound resilience and sufficient strength of a polyurethane foam, a method in which a bifunctional to trifunctional polyol is used in a specified compositional ratio has been known (see, for example, JP2004-161987 A).
However, since resin orientation is lowered in the above-mentioned method, further improvement in strength is required in weight reduction of a polyurethane foam.
In addition, in the field of a flexible polyurethane foam, a method in which a polyester-polyol and a polyether-polyol are used together (see, for example, JP-A-Hei 7-025974); and a method in which a polyester-polyol using a polyhydric alcohol having a side chain in its main chain and a polyether-polyol are used together (see, for example, JP-A-Hei 2-232218) have been known.
However, these flexible polyurethane foams are low-hardness foamed articles in which a polyisocyanate component generally contains toluene diisocyanate as a main component, the formed articles having a molding density of less than 0.1 $g/cm^3$ which are so soft that they are undeterminable with a C-type hardness tester as prescribed in JIS K 7312. Therefore, these flexible polyurethane foams do not have the mechanical strength desired in the present invention.
Therefore, in recent years, the development of a polyurethane foam having a molding density of 0.1 $g/cm^3$ or more and hardness that is determinable with a C-type hardness tester as prescribed in JIS K 7312, the polyurethane foam having high foam strength, and being excellent in elongation has been desired.

SUMMARY OF THE INVENTION

The present invention relates to a method for producing a polyurethane foam having a density of 0.1 $g/cm^3$ or more, including the step of reacting a polyol component and a polyisocyanate component, the polyol component containing:

(polyol A): a polyester-polyol having a hydroxyl value of from 45 to 115 mgKOH/g, obtained by polycondensing a polyhydric alcohol component containing a polyhydric alcohol having a side chain and a polybasic acid component; and
(polyol B): a polyether-polyol having 3 functional groups and a hydroxyl value of from 15 to 40 mgKOH/g,

wherein the weight ratio of the polyol A to the polyol B, i.e. polyol A/polyol B, is from 1.2 to 3.

DETAILED DESCRIPTION OF THE INVENTION

The present invention relates to a method for producing a polyurethane foam having high foam strength and low rebound resilience.
According to the method for producing a polyurethane foam of the present invention, a polyurethane foam which is excellent in high foam strength and low rebound resilience can be obtained.
These and other advantages of the present invention will be apparent from the following description.
The polyol component contains a polyol A and a polyol B.
The polyol A is a polyester-polyol having a hydroxyl value of from 45 to 115 mgKOH/g, obtained by polycondensing a polyhydric alcohol component containing a polyhydric alcohol having a side chain and a polybasic acid component.

The polyol A has a hydroxyl value of from 45 to 115 mgKOH/g, preferably from 50 to 100 mgKOH/g, more preferably from 70 to 90 mgKOH/g, even more preferably from 71 to 86 mgKOH/g, and even more preferably from 71 to 77 mgKOH/g, from the viewpoint of improving dimensional stability and increasing foam strength of a polyurethane foam. Here, the hydroxyl value is a value that is determined based on JIS K 0070.

The polyhydric alcohol having a side chain refers to a compound containing only a primary hydroxyl group as a hydroxyl group and having an alkyl group as a side chain. The number of carbon atoms of the alkyl group at a side chain is preferably from 1 to 4, and more preferably from 1 to 2, from the viewpoint of increasing foam strength.

Concrete examples of the polyhydric alcohol having a side chain include 2-methyl-1,3-propanediol, 2-butyl-2-ethyl-1,3-propanediol, 2-methyl-1,4-butanediol, neopentyl glycol, 2,2-dimethyl-1,4-butanediol, 2,3-dimethyl-1,4-butanediol, 3-methyl-1,5-pentanediol, 2,3-dimethyl-1,5-pentanediol, 2,4-diethyl-1,5-pentanediol, 3-ethyl-1,5-pentanediol, 2-methyl-1,6-hexanediol, 3-methyl-1,6-hexanediol, 2,3,4-trimethyl-1,5-pentanediol, 3,3-dimethyl-1,6-hexanediol, 3,3-diethyl-1,5-pentanediol, 3,3-diethyl-1,6-hexanediol, and the like. Those polyhydric alcohols can be used alone or in admixture of two or more kinds. Among them, 3-methyl-1,5-pentanediol is preferable from the viewpoint of satisfying both foam strength and impact absorbency.

The polyhydric alcohol having a side chain is contained in the polyhydric alcohol component in an amount of preferably from 70 to 100% by weight, more preferably from 90 to 100% by weight, even more preferably from 95 to 100%, and even more preferably substantially 100% by weight, from the viewpoint of hydrolytic resistance.

The polyhydric alcohol component contains the polyhydric alcohol having a side chain, and the polyhydric alcohol component may contain a polyhydric alcohol other than the polyhydric alcohol having a side chain. The content of the polyhydric alcohol other than the polyhydric alcohol having a side chain cannot be unconditionally determined because the content would differ depending upon the kinds of the polyhydric alcohol, and usually, the content may be within the range which would not impair the object of the present invention. It is preferable that the polyhydric alcohol other than the polyhydric alcohol having a side chain is usually contained in the polyhydric alcohol component in an amount of 10% by weight or less.

The polybasic acid component includes a polybasic acid component containing an aromatic carboxylic acid, an aliphatic carboxylic acid, and the like. The polybasic acid component contains, for example, an aliphatic carboxylic acid such as malonic acid, succinic acid, glutaric acid, adipic acid, or maleic acid; an aromatic carboxylic acid such as o-phthalic acid, isophthalic acid, terephthalic acid, or naphthalenedicarboxylic acid; an anhydride thereof, or a derivative thereof. Those polybasic acid components can be used alone or in admixture of two or more kinds. Among them, a polybasic acid component containing the aromatic carboxylic acid is preferable, among which a polybasic acid component containing terephthalic acid is more preferable, from the viewpoint of increasing foam strength. In addition, from the viewpoint of foam strength of the resulting polyurethane foam and reactivity with the polyhydric alcohol component, a polybasic acid component is preferably a polybasic acid component containing the aromatic carboxylic acid and/or the aliphatic carboxylic acid; for example, a combined use of adipic acid and terephthalic acid is preferable.

The molar ratio of the aromatic carboxylic acid to the aliphatic carboxylic acid, i.e. aromatic carboxylic acid/aliphatic carboxylic acid, is preferably from 0 to 0.25, more preferably from 0.1 to 0.2, and even more preferably from 0.12 to 0.16, from the viewpoint of compatibility with the polyhydric alcohol component.

Because the polycondensation of the polyhydric alcohol component and the polybasic acid component is a polycondensation of a hydroxyl group of the polyhydric alcohol component and an acid group of the polybasic acid component, a reaction between the polyhydric alcohol component and the polybasic acid component proceeds stoichiometrically. The polycondensation of the polyhydric alcohol component and the polybasic acid component can be carried out by an ordinary polycondensation reaction, and the present invention is not particularly limited by the method.

The polyol B is a polyether-polyol having 3 functional groups and a hydroxyl value of from 15 to 40 mgKOH/g.

The polyol B having 3 functional groups means a polyol obtained by subjecting an alkylene oxide to addition polymerization using a polyhydric alcohol having 3 functional groups as a polymerization initiator. The number of functional groups of the polyol B is 3, from the viewpoint of foam strength and dimensional stability.

The polyol B has a hydroxyl value of from 15 to 40 mgKOH/g, preferably from 24 to 37 mgKOH/g, and more preferably from 24 to 34 mgKOH/g, from the viewpoint of improving dimensional stability and increasing foam strength of a polyurethane foam. Here, the hydroxyl value is a value that is determined based on JIS K 0070.

It is preferable that the polyol B is one or more compounds selected from the group consisting of a polyether-polyol having 3 functional groups (hereinafter simply referred to as "polyether-polyol") and a polymer-polyol containing the polyether-polyol as a base material (hereinafter simply referred to as "polymer-polyol"), from the viewpoint of viscosity and liquidity.

The polyether-polyol includes, for example, a polyether-polyol obtained by subjecting an alkylene oxide to addition polymerization using a polyhydric alcohol such as glycerol, trimethylolpropane, or 1,2,6-hexanetriol, as a polymerization initiator; a polyoxytetramethylene glycol; and the like. Among them, a polyether-polyol obtained by subjecting an alkylene oxide to addition polymerization using glycerol as a polymerization initiator is preferable.

Representative examples of the polymer-polyol include a polymer-polyol in which fine polymer particles obtained by polymerizing a polymerizable unsaturated group-containing monomer are dispersed in a polyether-polyol; and the like. The polymer-polyol can be produced, for example, by a method including the step of mixing fine polymer particles obtained by polymerizing a polymerizable unsaturated group-containing monomer and a polyether-polyol, to disperse the fine polymer particles in the polyether-polyol; a method including the steps of polymerizing the above-mentioned polymerizable unsaturated group-containing monomer in the above-mentioned polyether-polyol, to give fine polymer particles obtained from the above-mentioned polymerizable unsaturated group-containing monomer, and dispersing the fine polymer particles in the polyether-polyol; and the like. Among these methods, the latter method is preferred because a polymer-polyol in which the fine polymer particles are homogenously dispersed in the polyether-polyol can be easily obtained.

The polymerizable unsaturated group-containing monomer includes, for example, styrene; acrylonitrile; alkyl methacrylates of which alkyl group has 1 to 4 carbon atoms, such as methyl methacrylate, ethyl methacrylate, and butyl methacrylate; glycidyl methacrylate; alkyl acrylates of which alkyl group has 1 to 4 carbon atoms, such as methyl acrylate, ethyl acrylate, and butyl acrylate; glycidyl acrylate; and the like. Those monomers can be used alone or in admixture of two or more kinds.

It is preferable that the polyol component further contains a polyether-polyol having 6 functional groups and a hydroxyl value of from 380 to 550 mgKOH/g (hereinafter simply referred to as "polyol C"), from the viewpoint of giving the resulting polyurethane foam low rebound resilience and from the viewpoint of increasing elongation of the polyurethane foam.

The polyol C can be easily prepared by adding an oxypropylene to sorbitol. An average number of moles of a polyoxypropylene group added to sorbitol is preferably from 7 to 15, more preferably from 8 to 12, and even more preferably 9 or 10, from the viewpoint of giving the resulting polyurethane foam low rebound resilience.

The polyol C has a hydroxyl value of preferably from 380 to 550 mgKOH/g, more preferably from 400 to 530 mgKOH/g, and even more preferably from 450 to 500 mgKOH/g, from the viewpoint of giving the resulting polyurethane foam low rebound resilience and improving foam elongation and foam strength of the polyurethane foam. Here, the hydroxyl value is a value that is determined based on JIS K 0070.

The polyol A is contained in the polyol component in an amount of preferably 50% by weight or more, more preferably 55% by weight or more, and even more preferably 60% by weight or more, from the viewpoint of increasing foam strength, and the polyol A is contained in the polyol component in an amount of preferably 80% by weight or less, more preferably 70% by weight or less, and even more preferably 65% by weight or less, from the viewpoint of maintaining hydrolytic resistance.

The polyol B is contained in the polyol component in an amount of preferably 15% by weight or more, more preferably 20% by weight or more, and even more preferably 25% by weight or more, from the viewpoint of providing dimensional stability, and the polyol B is contained in the polyol component in an amount of preferably 50% by weight or less, more preferably 40% by weight or less, and even more preferably 30% by weight or less, from the viewpoint of increasing foam strength.

The weight ratio of the polyol A to the polyol B, i.e. polyol A/polyol B, is from 1.2 to 3, preferably from 1.2 to 2, more preferably from 1.3 to 2, and even more preferably from 1.3 to 1.7, from the viewpoint of foam strength and dimensional stability.

The polyol C is contained in the polyol component in an amount of preferably 1% by weight or more, more preferably 2% by weight or more, and even more preferably 4% by weight or more, from the viewpoint of increasing foam strength, and the polyol C is contained in the polyol component in an amount of preferably 25% by weight or less, more preferably 20% by weight or less, and even more preferably 10% by weight or less, from the viewpoint of providing dimensional stability.

Here, the polyol component may contain a polyol other than the polyol A, the polyol B, and the polyol C within the range which would not impair the object of the present invention.

The polyol component can be used by being contained in a polyol mixture. Here, the polyol mixture refers to a mixture containing a polyol component, and optionally a blowing agent, a chain extender, a catalyst, or the like.

The polyol component is contained in the polyol mixture in an amount of preferably from 60% by weight or more, and more preferably from 70% by weight or more, from the viewpoint of improving foam strength, providing flexibility, and improving dimensional stability.

Representative examples of the polyisocyanate component used in the production of a polyurethane foam include an isocyanate prepolymer and the like. The isocyanate prepolymer is liquid at a temperature of 15˚C or more and injectable even at a low pressure. Therefore, for example, there is an advantage that the isocyanate prepolymer can be used in the production of a polyurethane foam even at a molding temperature of from 40˚ to 50˚C without any disadvantages.

The isocyanate prepolymer can be obtained by reacting a polyol and an excess amount of an isocyanate monomer while stirring according to a conventional method.

Concrete examples of the isocyanate monomer include m-phenylene diisocyanate, p-phenylene diisocyanate, xylylene diisocyanate, 4,4'-diphenylmethane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3'-dichloro-4,4'-biphenylene diisocyanate, 1,5-naphthalene diisocyanate, their modified products, for example, carbodiimide modified products and the like. Those monomers can be used alone or in admixture of two or more kinds. Among them, 4,4'-diphenylmethane diisocyanate and a carbodiimide modified product of 4,4'-diphenylmethane diisocyanate are preferable, and 4,4'-diphenylmethane diisocyanate alone or a combined use of 4,4'-diphenylmethane diisocyanate and a carbodiimide modified product of 4,4'-diphenylmethane diisocyanate are more preferable, from the viewpoint of securing sufficient foam strength.

Among the isocyanate prepolymers, an isocyanate prepolymer obtained by using 4,4'-diphenylmethane diisocyanate and a carbodiimide modified product of 4,4'-diphenylmethane diisocyanate as raw materials is preferable from the viewpoint of securing sufficient foam strength.

Here, in the isocyanate prepolymer obtained by using the carbodiimide modified product of 4,4'-diphenylmethane diisocyanate as a raw material, 4,4'-diphenylmethane diisocyanate may be co-present.

When the isocyanate prepolymer is prepared, an auxiliary can be optionally added.

The auxiliary includes, for example, auxiliaries which have been optionally used in the preparation of the polyester-polyol, and isocyanate self-polymerization inhibitors including acidic gases such as hydrogen chloride gas and sulfurous acid gas, acid chlorides such as acetyl chloride, benzoyl chloride, and isophthalic acid chloride, phosphoric acid compounds such as phosphoric acid, monoethyl phosphate, and diethyl phosphate, in order to prevent self-polymerization of the isocyanate prepolymer. Those auxiliaries can be used alone, or in admixture of two or more kinds.

The NCO% of the isocyanate prepolymer is preferably 14% or more, and more preferably 16% or more, in order to avoid the isocyanate prepolymer from having undesirably high viscosity which results in difficulties in molding with a low-pressure blowing machine. The NCO% of the isocyanate prepolymer is preferably 23% or less, more preferably 20% or less, and even more preferably 18% or less, in order to avoid the isocyanate prepolymer from having undesirably low viscosity which results in poor measuring accuracy of the blowing machine.

It is preferable that the NCO% of the polyisocyanate component is from 10 to 25%, from the viewpoint of preventing a liquid viscosity from being elevated and storage stability of the liquid.

Here, in the method for producing a polyurethane foam of the present invention, it is preferable to use a catalyst from the viewpoint of increasing the reaction rate. The catalyst can be contained in the polyol mixture.

The catalyst includes, for example, TEDA [1,4-diazabicyclo[2.2.2]octane], N,N,N',N'-tetramethylhexamethylenediamine, N,N,N',N'-tetramethylpropylenediamine, N,N,N',N',N"-pentamethyldiethylenetriamine, trimethylaminoethylpiperazine, N,N-dimethylcyclohexylamine, N,N-dimethylbenzylamine, N-methylmorpholine, N-ethylmorpholine, triethylamine tributylamine, bis(dimethylaminoalkyl)piperazines, N,N,N',N'-tetramethylethylenediamine, N,N-diethylbenzylamine, bis(N,N-diethylaminoethyl)adipate, N,N,N',N'-tetramethyl-1,3-butanediamine, N,N-dimethyl-β-phenylethylamine, 1,2-dimethylimidazole, 2-methylimidazole, and the like. These catalysts can be used alone or in admixture of two or more kinds. Among these catalysts, the tertiary amines are preferable from the viewpoint of an increasing reaction rate.

Here, as the catalyst other than an amine-based catalyst, for example, an organometallic compound such as dibutyltin dilaurate, stannous oleate, cobalt naphthenate, or lead naphthenate can be also used.

A blowing agent can be used upon the production of a polyurethane foam. The blowing agent can be contained in the polyol mixture. As the blowing agent, water may be used alone or water may be used together with a hydrocarbon, a chlorofluorocarbon, or a hydrogenated fluorocarbon. Here, it is preferable to use water alone as the blowing agent, from the viewpoint of avoiding the depletion of ozone layer of the earth.

When water is used as a blowing agent, water generally reacts with a polyisocyanate component to form a rigid hard segment. However, the density of the polyurethane foam is lowered due to the influence of carbon dioxide gas generated by the reaction of the polyisocyanate component and water. Therefore, the amount of water as the blowing agent is preferably from 0.3 to 2 parts by weight, more preferably from 0.5 to 1.8 parts by weight, and even more preferably from 0.6 to 1.5 parts by weight, based on 100 parts by weight of the total amount of the polyol component.

In the present invention, as an additive, a chain extender, a silicone-based surfactant, a pigment, an antioxidant, a yellowing preventive, or the like can be used. Those additives can be contained in the polyol mixture.

As the chain extender, a compound having two or more active hydrogens in its molecule, a compound having a number-average molecular weight of 1,000 or less can be used.

Representative examples of the chain extender include polyhydric alcohols such as ethylene glycol, diethylene glycol, propylene glycol, 1,4-butanediol, 1,5-pentanediol, methylpentanediol, 1,6-hexanediol, trimethylolpropane, glycerol, pentaerythritol, diglycerol, dextrose, and sorbitol; aliphatic polyamines such as ethylenediamine and hexamethylenediamine; aromatic polyamines; alkanolamines such as diethanolamine, triethanolamine, and diisopropanolamine; modified products thereof; and the like. Those chain extenders can be used alone or in admixture of two or more kinds.

A preferred chain extender includes ethylene glycol, diethylene glycol, 1,4-butanediol, pentaerythritol, and modified products thereof, each having a number-average molecular weight of 1,000 or less.

It is desired that the mixing ratio of the polyol component to the polyisocyanate component is adjusted so that the isocyanate index is preferably from 60 to 100, more preferably from 65 to 95, and even more preferably from 70 to 90, from the viewpoint of improving moldability.

The method for producing a polyurethane foam includes, for example, a method including the steps of mixing a polyol mixture obtained by previously mixing a polyol component, a catalyst, a blowing agent, auxiliaries, and the like, while stirring, and a polyisocyanate component in a molding machine while stirring; injecting the resulting mixture into a mold; and allowing the mixture to foam, and the like. More specifically, the method for producing a polyurethane foam includes, for example, a method including the steps of mixing a polyol component, a catalyst, a blowing agent, auxiliaries, and the like, while stirring using a tank or the like; controlling the temperature of the resulting polyol mixture to about 40°C, and thereafter mixing the polyol mixture with the polyisocyanate component using a foaming machine such as an automatically mixing and injecting foaming machine or an automatically blending and injecting foaming machine; and allowing the mixture to react and foam.

The polyurethane foam thus obtained has density of 0.1 $g/cm^3$ or more, preferably from 0.1 to 0.70 $g/cm^3$, more preferably from 0.2 to 0.65 $g/cm^3$, and even more preferably from 0.3 to 0.60 $g/cm^3$, from the viewpoint of securing sufficient foam strength and dimensional stability.

In addition, the polyurethane foam has a hardness (determined by Asker C hardness tester as prescribed in JIS K 7312 at a temperature of 25°C) of preferably from 40 to 80 and more preferably from 45 to 75, from the viewpoint of providing foam strength and flexibility.

The polyurethane foam has a foam strength, when a tensile strength (as determined at a temperature of 25°C by using a test piece having a dumbbell shape No. 2 and being perforated from a polyurethane foam having a thickness of 10 mm based on a determination described in JIS K 6301) is used as an index, of preferably 2 MPa or more, more preferably 2.2 MPa or more, and even more preferably from 2.5 to 10 MPa, from the viewpoint of obtaining sufficient mechanical strength and durability.

The polyurethane foam has rebound resilience (as determined by using a polyurethane foam having a diameter of 32 mm and a thickness of 10 mm at a temperature of 25°C based on a rebound resilience test as prescribed in JIS K 6301) of preferably 35% or less, more preferably 32% or less, and even more preferably from 30% or less, from the viewpoint of absorbing impact energy applied externally. In addition, the polyurethane foam has rebound resilience of preferably 10% or more, more preferably 12% or more, and even more preferably from 14% or more, from the viewpoint of easiness to recover to its original shape upon deformation when applying an external force thereto. From the above viewpoint, the polyurethane foam has rebound resilience of preferably from 10 to 35%, more preferably from 12 to 32%, and even more preferably from 14 to 30%.

The polyurethane foam of the present invention can be suitably used as shoe soles and cushioning materials for automobiles and other vehicles, furniture, beddings, and the like. In addition, preferred applications as shoe soles include shoe soles for men's shoes, casual shoes, and the like. In general, a shoe sole comprises members for shoe soles classified into an outer sole used in sandals, men's shoes, and the like; a midsole used in athletic shoes and the like; and an inner sole (insole) internally inserted in the shoe. The polyurethane foam of the present invention can be suitably used for these members for shoe soles. Among them, use for outer soles is preferable from the viewpoint of especially being excellent in foam strength and having a low rebound resilience.

The shoe of the present invention contains a shoe sole having the above-mentioned polyurethane foam, and can be usually produced by integrating a main body of the shoe (instep or the like) and a shoe sole. The main body of the shoe is a part fitting around the instep of a foot. The material and shape of the main body of the shoe are not limited to specified ones.

EXAMPLES

The following examples further describe and demonstrate embodiments of the present invention. The examples are given solely for the purposes of illustration and are not to be construed as limitations of the present invention.

Examples 1 to 15 and Comparative Examples 1 to 5

A polyol component, a chain extender (ethylene glycol or diethylene glycol), a catalyst (triethylenediamine), a silicone-based surfactant (commercially available from Dow Coming Toray Co., Ltd. under the trade name of SH193 or SRX253), a blowing agent (water) and a pigment (commercially available from Nippon Pigment Co., Ltd. under the trade name of NV-7-478) were mixed together so as to have a composition as shown in Table 1, to provide a polyol mixture.

As a polyisocyanate component, a product commercially available from Kao Corporation under the trade name of EDDYFOAM B-6106M (NCO%: 16%) was used, and a compositional ratio of the polyol mixture and the polyisocyanate component was adjusted so that an isocyanate index calculated on the basis of the formula:

[Isocyanate Index]

$$= \text{(Amount of isocyanate actually used)}$$

$$\div \text{(Amount of isocyanate stoichiometrically equivalent to the amount of polyol)}$$

$$\times 100$$

shows a value given under "INDEX" in Table 1.

An automated blending injection foaming machine (commercially available from Polyurethane Engineering Co., Ltd., model MU-203S, No. 6-018) was charged with the polyol mixture and the polyisocyanate component, and the mixture was mixed at a temperature of from 35° to 45°C. The resulting mixture was injected into a mold of which mold temperature was adjusted to a range from 45° to 55°C (coated with a silicone releasing agent on its inner surface), and allowed to be foamed under the following molding conditions to give a test sheet made of polyurethane foam, having a size of 10 mm x 100 mm x 300 mm.

[Molding Conditions]

- Reactivity: cream time: 5 to 15 seconds
- Demolding time: 5.5 to 6.5 minutes

Abbreviations of each component mean the followings.

(1) Polyol Component

[Polyol A]

A1:  Polycondensate of 3-methyl-1,5-pentanediol and adipic acid [number of functional groups: 2, hydroxyl value: 86 mgKOH/g]

A2:  Polycondensate of 2,4-dimethyl-1,5-pentanediol and adipic acid [commercially available from KYOWA HAKKO KOGYO CO., LTD. under the trade name of 2000PA, number of functional groups: 2, hydroxyl value: 56 mgKOH/g]

A3:  Polycondensate of 2-butyl-2-ethyl-1,3-propanediol and adipic acid [commercially available from KYOWA HAKKO KOGYO CO., LTD. under the trade name of 2000BA, the number of functional groups: 2, hydroxyl value: 56 mgKOH/g]

A4:  Polycondensate of 3-methyl-1,5-pentanediol and adipic acid and terephthalic acid [number of functional groups: 2, hydroxyl value: 86 mgKOH/g, terephthalic acid/adipic acid (molar ratio): 0.2]

A5:  Polycondensate of 3-methyl-1,5-pentanediol and adipic acid and terephthalic acid [number of functional groups: 2, hydroxyl value: 86 mgKOH/g, terephthalic acid/adipic acid (molar ratio): 0.5]

A6:  Polycondensate of 3-methyl-1,5-pentanediol and adipic acid and terephthalic acid [number of functional groups: 2, hydroxyl value: 86 mgKOH/g, terephthalic acid/adipic acid (molar ratio): 1.0]

A7:  Polycondensate of 3-methyl-1,5-pentanediol and adipic acid and terephthalic acid [commercially available from Kuraray Co., Ltd. under the trade name of P-2011, number of functional groups: 2, hydroxyl value: 56 mgKOH/g, terephthalic acid/adipic acid (molar ratio):1.0]

[Polyol B]

B1:  Polypropylene triol [commercially available from Asahi Glass Urethane Co., Ltd. under the trade name of EXCENOL 820, number of functional groups. 3, hydroxyl value: 34 mgKOH/g]

B2:  Polypropylene triol [commercially available from Asahi Glass Urethane Co., Ltd. under the trade name of EXCENOL 845, number of functional groups: 3, hydroxyl value: 28 mgKOH/g]

B3:  Polypropylene triol [commercially available from Asahi Glass Urethane Co., Ltd. under the trade name of EXCENOL 850, number of functional groups: 3, hydroxyl value: 24 mgKOH/g]

[Polyol C]

C1: Polyoxypropylene sorbitol ether [oxypropylene adduct of sorbitol, commercially available from Sanyo Chemical Industries, Ltd. under the trade name of SUNNIX SP-750, number of functional groups: 6, hydroxyl value: 480 mgKOH/g]

[Other Polyols]

D1: PO adduct of pentaerythritol [commercially available from Sanyo Chemical Industries, Ltd. under the trade name of SUNNIX HD-402, number of functional groups: 4, hydroxyl value: 405 mgKOH/g]

D2: Polypropylene glycol [commercially available from Asahi Glass Urethane Co., Ltd. under the trade name of PREMINOL 5005, number of

functional groups: 2, hydroxyl value: 28 mgKOH/g]

(2) Surfactant

Surfactant 1: a product commercially available from Dow Coming Toray Co., Ltd. under the trade name of SH-193

Surfactant 2: a product commercially available from Dow Coming Toray Co., Ltd. under the trade name of SRX-253

In addition, as the polyisocyanate component, a product commercially available from Kao Corporation under the trade name of EDDYFOAM B-6016M (NCO%: 16.0%, isocyanate used in isocyanate prepolymer: 4,4'-diphenyl-methane diisocyanate) was used.

## Table 1

| | Ex. 1 | Comp. Ex. 1 | Ex. 2 | Ex. 3 | Ex. 4 | Ex. 5 | Ex. 6 | Comp. Ex. 2 | Comp. Ex. 3 | Comp. Ex. 4 | Ex. 7 | Ex. 8 | Ex. 9 | Ex. 10 | Ex. 11 | Ex. 12 | Ex. 13 | Ex. 14 | Ex. 15 | Comp. Ex. 5 |
|---|---|---|---|---|---|---|---|---|---|---|---|---|---|---|---|---|---|---|---|---|
| Components of Polyol Mixture (Parts by Weight) | | | | | | | | | | | | | | | | | | | | |
| Polyol Component | | | | | | | | | | | | | | | | | | | | |
| A1 | 62.5 | | 50 | 50 | 50 | | | | 20 | 40 | 60 | 60 | | | | | | | | |
| A2 | | | | | | | 50 | | | | | | | | | | | | | |
| A3 | | | | | | 50 | | | | | | | | | | | | | | |
| A4 | | | | | | | | | | | | | 60 | | | | | | | |
| A5 | | | | | | | | | | | | | | 60 | | | | | | |
| A6 | | | | | | | | | | | | | | | 60 | | | | | |
| A7 | | | | | | | | | | | | | | | | 60 | 60 | 60 | 60 | |
| B1 | 37.5 | 37.5 | 30 | | | 30 | 30 | 30 | 48 | 36 | 40 | 24 | 24 | 24 | 24 | 24 | 40 | 32 | 24 | 30 |
| B2 | | | | 30 | | | | | | | | | | | | | | | | |
| B3 | | | | | 30 | | | | | | | | | | | | | | | |
| C1 | | | | | | | | | | | | 16 | 16 | 16 | 16 | 16 | | 8 | 16 | |
| D1 | | | 20 | 20 | 20 | 20 | 20 | 20 | 32 | 24 | | | | | | | | | | 20 |
| D2 | | 62.5 | | | | | | 50 | | | | | | | | | | | | 50 |
| Ethylene glycol | 7.2 | 7.2 | 72 | 7.2 | 7.2 | 7.2 | 7.2 | 7.2 | 7.2 | 7.2 | 11.9 | 11.9 | 11.9 | 12 | 11.9 | 11.9 | 6.5 | 6.5 | 6.5 | 8.4 |
| Diethylene glycol | | | | | | | | | | | | | | | | | 1.2 | 1.2 | 1.2 | |
| Catalyst | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.5 | 0.5 | 0.5 | 0.6 |
| Surfactant 1 | 0.1 | 0.1 | 0.1 | 0.1 | 0.1 | 0.1 | 0.1 | 0.1 | 0.1 | 0.1 | | | | | | | | | | 0.1 |
| Surfactant 2 | | | | | | | | | | | 1 | 1 | 1 | 1 | 1 | 1 | 1 | 1 | 1 | |
| Water | 0.6 | 0.6 | 0.6 | 0.6 | 0.6 | 0.6 | 0.6 | 0.6 | 0.6 | 0.6 | 0.9 | 0.9 | 0.9 | 0.9 | 0.9 | 0.9 | 0.8 | 0.8 | 0.8 | 0.9 |
| Pigment | 4 | 4 | 4 | 4 | 4 | 4 | 4 | 4 | 4 | 4 | 4 | 4 | 4 | 4 | 4 | 4 | 4 | 4 | 4 | 4 |
| A/B | 1.7 | 0 | 1.7 | 1.7 | 1.7 | 1.7 | 1.7 | 0 | 0.4 | 1.1 | 1.5 | 2.5 | 2.5 | 2.5 | 2.5 | 2.5 | 1.5 | 1.9 | 2.5 | 0 |
| INDEX | 95 | 92 | 80 | 80 | 80 | 82 | 81 | 78 | 73 | 74 | 93 | 81 | 83 | 83 | 83 | 83 | 89 | 80 | 74 | 77 |
| (Note) | | | | | | | | | | | | | | | | | | | | |
| A/B: Weight ratio of polyol A/polyol B. | | | | | | | | | | | | | | | | | | | | |

EP 1 801 139 A2

Next, the physical properties of the prepared test sheet were evaluated in accordance with the following methods of Test Examples 1 to 4. The results are shown in Table 2.

[Test Example 1] (Hardness)

Hardness of a test sheet surface was determined with an Asker C hardness gauge at 25°C.

[Test Example 2] (Density)

Density was determined by measuring the weight of a test sheet (100 mm × 300 mm × 10 mm) and dividing the value with a volume of 300 cm$^3$.

[Test Example 3] (Tensile Strength and Elongation)

Tensile strength and elongation were determined in accordance with JIS K6251 using a dumbbell shaped No. 2 test piece perforated from the test sheet.

[Test Example 4] (Rebound Resilience)

Rebound resilience was determined in accordance with JIS K6255 using a test piece having a diameter of 32 mm (thickness 10 mm) perforated from the test sheet.

## Table 2

| Physical Properties | Ex. 1 | Comp. Ex. 1 | Ex. | | | | | Comp. Ex. | | | Ex. | | | | | | | | | Comp. Ex. 5 |
|---|---|---|---|---|---|---|---|---|---|---|---|---|---|---|---|---|---|---|---|---|
| | | | 2 | 3 | 4 | 5 | 6 | 2 | 3 | 4 | 7 | 8 | 9 | 10 | 11 | 12 | 13 | 14 | 15 | |
| Hardness (Asker C) | 62 | 64 | 60 | 59 | 58 | 61 | 61 | 55 | 55 | 55 | 68 | 68 | 68 | 68 | 70 | 70 | 50 | 53 | 56 | 55 |
| Density (g/cm$^3$) | 0.55 | 0.55 | 0.55 | 0.55 | 0.55 | 0.55 | 0.55 | 0.55 | 0.55 | 0.55 | 0.4 | 0.4 | 0.4 | 0.4 | 0.4 | 0.4 | 0.4 | 0.4 | 0.4 | 0.4 |
| Tensile Strength (MPa) | 3.6 | 2.99 | 3.44 | 3.25 | 3.35 | 2.86 | 3.09 | 2.72 | 2.36 | 2.5 | 2.99 | 2.66 | 2.75 | 3.09 | 3.25 | 3.46 | 2.48 | 2.71 | 2.79 | 2.09 |
| Elongation (%) | 500 | 550 | 440 | 470 | 490 | 300 | 340 | 450 | 410 | 470 | 330 | 350 | 330 | 320 | 250 | 350 | 320 | 360 | 410 | 380 |
| Rebound Resilience (%) | 35 | 45 | 19 | 17 | 18 | 11 | 14 | 25 | 18 | 22 | 22 | 15 | 14 | 12 | 10 | 16 | 15 | 11 | 7 | 21 |

EP 1 801 139 A2

[Test Example 5] (Compatibility)

A tin can with a screwed cap was charged with 80 g of a composition having proportions of 60 parts by weight of a polycondensate of 3-methyl-1,5-pentanediol and adipic acid and terephthalic acid having a terephthalic acid/adipic acid (molar ratio) and a hydroxyl value (OHV) as shown in Table 3, 36 parts by weight of a polypropylene triol (commercially available from Asahi Glass Urethane Co., Ltd. under the trade name of EXCENOL 845, number of functional groups: 3, hydroxyl value: 28 mgKOH/g), 4 parts by weight of a polyoxypropylene sorbitol ether (oxypropylene adduct of sorbitol, commercially available from Sanyo Chemical Industries, Ltd. under the trade name of SUNNIX SP-750, number of functional groups: 6, hydroxyl value: 480 mgKOH/g), and 8 parts by weight of ethylene glycol, and the components inside the tin can were mixed with a pencil mixer for one minute.

Compatibility of the mixture (after having been allowed to stand at 25°C for 3 days) was visually observed, and evaluated as follows:

⊚ : the mixture is transparent;

○ : the mixture is cloudy; and

∆ : the mixture is allowed to separate into layers.

The results are shown in Table 3.

| Table 3 | | | |
|---|---|---|---|
| | Polycondensate of 3-Methyl-1,5-pentanediol and Adipic Acid and Terephthalic Acid | | Compatibility (mixed state by allowing the mixture to stand at 25°C for 3 days) |
| | Terephthalic Acid/Adipic Acid (Molar Ratio) | OHV (mgKOH/g) | |
| 2-1 | 0.14 | 75 | ⊚ |
| 2-2 | 0.20 | 86 | ⊚ |
| 2-3 | 0.17 | 75 | ⊚ |
| 2-4 | 0.14 | 67 | ○ |
| 2-5 | 0.25 | 71 | ⊚ |
| 2-6 | 0.00 | 86 | ⊚ |
| 2-7 | 0.00 | 71 | ⊚ |
| 2-8 | 0.21 | 65 | ○ |
| 2-9 | 0.34 | 84 | ○ |
| 2-10 | 0.41 | 77 | ○ |
| 2-11 | 0.19 | 65 | ○ |
| 2-12 | 0.33 | 70 | ○ |
| 2-13 | 1.00 | 56 | ∆ |
| 2-14 | 1.00 | 86 | ∆ |
| 2-15 | 0.00 | 56 | ∆ |
| 2-16 | 0.50 | 86 | ○ |
| 2-17 | 0.60 | 60 | ○ |

Examples 16 and 17

A polyol component, a chain extender (ethylene glycol), a catalyst (triethylenediamine), a surfactant, a blowing agent (water) and a pigment (commercially available from Nippon Pigment Co., Ltd. under the trade name of NV-7-478) were mixed together so as to have a composition as shown in Table 4, to give a polyol mixture. Here, the polyol mixture of Example 16 is the same one as that of 2-1 used in Test Example 5 shown in Table 3. In addition, the polyol mixture shown in Table 4 contains a catalyst, a surfactant, a blowing agent and a pigment in addition to the polyol component, but these other components are contained in small amounts that are considered to hardly affect compatibility of the polyol component. Therefore, the polyol mixture of Example 17 presumably has excellent miscibility during its preparation in the same manner as in Example 16, and has excellent compatibility when the mixture was allowed to stand at 25°C for 3 days.

As a polyisocyanate component, a product commercially available from Kao Corporation under the trade name of EDDYFOAM B-6106M (NCO%: 16%) was used, and a compositional ratio of the polyol mixture and the polyisocyanate component was adjusted so that an isocyanate index calculated on the basis of the above formula shows a value given under "INDEX" in Table 4.

The polyol mixture and the polyisocyanate component were mixed and molded under the same conditions as above, to give a test sheet made of polyurethane foam, having a size of 10 mm x 100 mm x 300 mm.

Abbreviations of each component mean the followings.

(1) Polyol Component

Polyol A: Polycondensate of 3-methyl-1,5-pentanediol and adipic acid and terephthalic acid [number of functional groups: 2, hydroxyl value: 75 mgKOH/g, terephthalic acid/adipic acid (molar ratio): 0.14]
Polyol B: Polypropylene triol [commercially available from Asahi Glass Urethane Co., Ltd. under the trade name of EXCENOL 845, number of functional groups: 3, hydroxyl value: 28 mgKOH/g]
Polyol C: Polyoxypropylene sorbitol ether [oxypropylene adduct of sorbitol, commercially available from Sanyo Chemical Industries, Ltd. under the trade name of SUNNIX SP-750, number of functional groups: 6, hydroxyl value: 480 mgKOH/g]

(2) Surfactant

Surfactant: a product commercially available from Dow Corning Toray Co., Ltd. under the trade name of SH-193

In addition, as a polyisocyanate component, a product commercially available from Kao Corporation under the trade name of EDDYFOAM B-6016M (NCO%: 16.0%, isocyanate used in isocyanate prepolymer: 4,4'-diphenylmethane diisocyanate) was used.

Next, physical properties of the prepared test sheets were evaluated in accordance with the methods of Test Examples 1 to 4 mentioned above. The results are shown in Table 4.

| Table 4 | | | |
|---|---|---|---|
| | | Ex. | |
| | | 16 | 17 |
| Formulation Composition of Polyol Mixture (Parts by Weight) | | | |
| Polyol | A | 60 | 55 |
| | B | 36 | 41 |
| | C | 4 | 4 |
| Ethylene Glycol | | 8 | 8 |
| Catalyst | | 0.7 | 0.7 |
| Surfactant | | 0.1 | 0.1 |
| Water | | 0.6 | 0.6 |
| Pigment | | 4.0 | 4.0 |
| INDEX | | 88 | 88 |
| Physical Properties | | | |
| Hardness | Asker C | 56 | 55 |
| Density | g/cm$^3$ | 0.40 | 0.40 |
| Tensile Strength | MPa | 3.38 | 3.4 |

(continued)

| Physical Properties | | | |
|---|---|---|---|
| Elongation | % | 390 | 420 |
| Rebound Resilience | % | 14 | 15 |
| A/B | | 1.67 | 1.34 |
| (Note) | | | |
| A/B: Weight ratio of polyol A/polyol B. | | | |

It can be seen from the results shown in Table 2 that in the comparison of Example 1 with Comparative Example 1, since the polyol A and the polyol B are used together in Example 1, the resulting polyurethane foam has increased tensile strength, and at the same time, reduced rebound resilience. In addition, it can be seen from the results of the comparison of the polyurethane foams obtained in Examples 2 to 6 with those obtained in Comparative Examples 2 to 4, of which densities are the same, and the results of the comparison of the polyurethane foams obtained in Examples 7 to 15 with Comparative Example 5 of which densities are the same that all the polyurethane foams obtained in each of the Examples have excellent tensile strength and low rebound resilience. In addition, it can be seen from the results shown in Table 3 that a polyol component having an aromatic carboxylic acid/aliphatic carboxylic acid (molar ratio) of from 0 to 0.25 and a hydroxyl value of from 70 to 90 mgKOH/g has excellent compatibility. It can be seen from the results of Table 4 that a polyurethane foam obtained by using the polyol component having excellent compatibility has the same level of tensile strength and a low rebound resilience, as those of the polyurethane foams of Examples 7 to 15 of which densities are the same, so that a polyurethane foam having high foam strength and low rebound resilience can be obtained according to the present invention.

Example 18

A shoe sole was produced using the raw materials of Example 16.

A mold releasing agent [commercially available from Kao Corporation under the trade name of "PURAPOWER 2060"] was previously applied in an amount of 0.002 g/cm$^3$ to an inner surface of a mold for a shoe sole having an internal shape of a shoe sole for men's shoes, and the mold was temperature-controlled to 50˚ $\pm$ 1˚C. Next, a polyol mixture and a polyisocyanate component having the same compositions as in Example 16 were mixed so as to have an isocyanate index of 88, and the resulting mixture was injected into a molding machine for a polyurethane shoe sole [commercially available from Polyurethane Engineering Co., Ltd., model MU-203S]. After having injected once to be discarded, the mixture was injected into the above-mentioned mold. After 6 minutes passed, the molded product was demolded, to give a shoe sole made of a polyurethane foam. The resulting shoe sole did not have any disadvantages as a shoe sole from the viewpoint of appearance, strength and rebound resilience.

The polyurethane foam obtained according to a method of the present invention can be suitably used, for example, in shoe soles, cushioning materials for automobiles and other transportation vehicles, furniture, beddings, and the like.

The present invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.  A method for producing a polyurethane foam having a density of 0.1 g/cm$^3$ or more, comprising the step of reacting a polyol component and a polyisocyanate component, the polyol component comprising:

    (polyol A): a polyester-polyol having a hydroxyl value of from 45 to 115 mgKOH/g, obtained by polycondensing a polyhydric alcohol component comprising a polyhydric alcohol having a side chain and a polybasic acid component; and
    (polyol B): a polyether-polyol having 3 functional groups and a hydroxyl value of from 15 to 40 mgKOH/g,

    wherein the weight ratio of the polyol A to the polyol B is from 1.2 to 3.

**2.** The method according to claim 1, wherein the polyhydric alcohol having a side chain used in the polyol A is a polyhydric alcohol having a side chain having 1 to 4 carbon atoms.

**3.** The method according to claim 1 or 2, wherein the polybasic acid component used in the polyol A is a polybasic acid component comprising an aromatic carboxylic acid.

**4.** The method according to any one of claims 1 to 3, wherein the polybasic acid component used in the polyol A is at least one compound selected from the group consisting of aromatic carboxylic acids, aliphatic carboxylic acids, and mixtures thereof, wherein the molar ratio of the aromatic carboxylic acid to the aliphatic carboxylic acid is from 0 to 0.25, and the polyol A has a hydroxyl value of from 70 to 90 mgKOH/g.

**5.** The method according to any one of claims 1 to 4, wherein the polyol B is a polyether polyol obtained by subjecting an alkylene oxide to addition polymerization using glycerol as a polymerization initiator.

**6.** The method according to any one of claims 1 to 5, wherein the polyol component further comprises a polyether-polyol having 6 functional groups and a hydroxyl value of from 380 to 550 mgKOH/g.

**7.** The method according to any one of claims 1 to 6, wherein the polyisocyanate component is an isocyanate prepolymer.

**8.** The method according to any one of claims 1 to 7, wherein the polyisocyanate component is an isocyanate prepolymer obtained by using 4,4'-diphenylmethane diisocyanate or a carbodiimide modified product of 4,4'-diphenylmethane diisocyanate as a raw material.

**9.** A polyurethane foam obtained by the method as defined in any one of claims 1 to 8, wherein the polyurethane foam has a density of from 0.1 to 0.70 g/cm$^3$ and a tensile strength of 2 MPa or more.

**10.** The polyurethane foam according to claim 9, wherein the polyurethane foam has a rebound resilience of from 10 to 35%.

**11.** The polyurethane foam according to claim 9 or 10, wherein the polyurethane foam has a hardness of from 40 to 80.

**12.** A shoe sole comprising the polyurethane foam as defined in any one of claims 9 to 11.

**13.** A shoe comprising the shoe sole as defined in claim 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004161987 A
- JP HEI7025974 A
- JP HEI2232218 A